# FASCICULE DE BREVET EUROPEEN

(11) **EP 2 047 609 B1**
(45) Date de publication et mention de la délivrance du brevet: **01.11.2017**
(21) Numéro de dépôt: 06808052.2
(22) Date de dépôt: 02.08.2006
(51) Int. Cl.: H04B 3/54

(54) **SYSTÈME DE RESEAU HAUTE DISPONIBILITÉ**
NETZWERKSYSTEM MIT HOHER VERFÜGBARKEIT
HIGH AVAILABILITY NETWORK SYSTEM

(43) Date de publication de la demande: 15.04.2009
(73) Titulaire: Siemens S.A.S., 93527 Saint-Denis Cedex (FR)
(72) Inventeur: CHENU, Eric, 92370 Chaville (FR); CHOCHOIS KARTMANN, Bénédicte, 92260 Fontenay aux Roses (FR); FUMERY, Benoît, 91440 Bures sur Yvette (FR); RENARD, Nicolas, 92320 Châtillon (FR); DE LAJUDIE, Raphaëlle, 75015 Paris (FR)
(74) Mandataire: Maier, Daniel Oliver
(86) Numéro de dépôt international: PCT/FR2006/001897
(87) Numéro de publication internationale: WO 2008/015316

(56) Documents cités:
- EP-A- 1 533 913
- WO-A-97/31430
- US-A1- 2005 040 709

## Description

La présente invention concerne un système de communication selon le préambule de la revendication 1.

L'invention est adaptée en particulier à un véhicule. Par véhicule, il est sous-entendu que divers type de moyens de locomotion sont concernés, plus particulièrement dans le domaine des transports de passagers ou/et de marchandises. Ainsi, un transport ferroviaire tel qu'un train et ses wagons sur rail, un tramway, mais aussi un train sur pneu, avec ou sans rail, ou un autobus à au moins un compartiment rentrent à titre d'exemples dans le cadre de l'invention. D'autres moyens de locomotion hors du domaine terrestre pourraient être aussi concernés tels qu'une navette maritime comme un « ferryboat ». En particulier, tous ces véhicules comprennent des moyens de contrôle ou de commande, communément appelés par la suite contrôleurs, qui permettent de générer ou d'exécuter des applications de commande, par exemple pour le guidage du véhicule, voire l'autoguidage du véhicule si celui-ci n'a pas de chauffeur. D'autres applications nombreuses sont bien entendu possibles, mais ne seront pas énumérées pour des raisons de clarté.

Ainsi, d'un premier point de vue interne au véhicule, un réseau de communication entre au moins deux interfaces de communication est bien connu, celles-ci étant respectivement reliées à un premier contrôleur générant une application de commande et un deuxième contrôleur exécutant l'application de commande. Les contrôleurs peuvent par exemple être composés d'un ou plusieurs calculateurs embarqués dans notre cas présent à bord du véhicule. Les interfaces de communication possèdent par contrôleur au moins un port de communication vers une liaison de communication de type usuel Ethernet, ADSL, WiFi, etc. afin de permettre une transmission d'information entre les contrôleurs via les interfaces de communication de type Modem, Switch, Relais-bridge, etc. Des liaisons redondantes en cas de panne d'une liaison ponctuelle sont aussi réalisable, par exemple en démultipliant les liaisons ou câbles de transmission qui seront activées pour un nouveau routage de données au moyen de commutateur de type Switch, Routeur par exemple en reconfigurant un routeur, lui-même obéissant à un protocole de type Internet/Ethernet.

D'un autre point de vue externe au véhicule, des informations peuvent aussi être transmises d'une première interface de communication au sol, par exemple disposée sur le trajet du véhicule, vers une deuxième interface de communication embarquée dans le véhicule et vice-versa. Encore par extension, la première interface de communication peut aussi être en réseau ou « sous-réseau » avec une troisième interface de communication au sol, par exemple vers un serveur central de gestion du traffic ou un point d'accès à un autre véhicule. En bref, il est facile de comprendre que les systèmes de communications adapté pour le véhicule, c'est-à-dire dans le véhicule, au sol et entre le véhicule et le sol, comprennent des réseaux complexes dont l'architecture des liaisons de réseau est du type multi-point et les protocoles de transmission de données peuvent être variés suivant les applications souhaitées.

Un bon exemple illustrant la complexité d'un réseau de communication entre un train sur rail connecté à des caténaires électriques et un réseau de type « IP network » (IP= « Internet Protocol ») qui peut être externe au train (par exemple au sol) est donné par EP 1533913 A1. Pour faire communiquer une interface de communication du réseau IP avec un interface de communication (« end user ») embarquée dans le véhicule le véhicule, un convertisseur de données (« converting means ») est placé le long des rails pour convertir des données transmises ou reçues selon le format « IP » vers un format de type « PLC » (=Power Line Communications»), lesquelles seront par exemple transmises à la sortie du convertisseur sous le format PLC via les caténaires électriques jusqu'à une interface de communication du train. Pour atteindre une puissance requise sur les caténaires, le convertisseur se compose de plusieurs unités de conversion le long du rail. La technique de communication de type « PLC », aussi dénommée « CPL » (« Courants Porteurs en Ligne ») en langue française, permet en particulier dans cet exemple d'utiliser une bande passante suffisamment large pour des données à haut débit du réseau IP vers le train et vice-versa (bilatéralité de transmission possible) et de s'adapter à une communication sol-train pour des trains de diverses longueurs. De plus, le convertisseur utilisé est associé à des moyens de répétitions (« repeating means ») recevant ou transmettant des données dont les signaux sont séparés en deux bandes de fréquence destinées à déterminer la direction de transmission (bilatérale) des données entre le réseau IP et le train. Si une portion de trajet ne comporte pas de caténaires, un commutateur de communication du type CPL vers un type radiofréquence est activé, de façon à assurer une liaison radio également bifréquence selon la direction de transmission des données. La liaison de type CPL et la liaison de type radiofréquence forment ainsi une liaison redondante en cas d'impossibilité d'utilisation de l'un ou de l'autre liaison. En bref, pour une seule liaison avantageusement redondante entre un train et un réseau sol, deux différents types de communication sont utilisés, ce qui impliquent donc des commutations au niveau des équipements, par exemple en ajoutant des moyens de routages supplémentaires, en particulier au port de sortie des interfaces de communication pour choisir la voie CPL ou radiofréquence. Ceci implique aussi un changement de configuration des routeurs et du routage des données suivant le protocole de communication utilisé, d'une part au niveau du réseau IP et d'autre part au niveau du véhicule. De telles reconfigurations liées à un nouveau routage demandent actuellement bien plus que quelques secondes, ce qui en cas de défaillance reste par exemple au-delà de la tolérance de 3 secondes exigée par certains automatismes de transport ferroviaire.

De façon générale, des applications relatives à un traitement de contrôle/commande sont couramment utilisées dans les transports en particulier automatisés, tel que, par exemple, les trains urbains automatiques sans chauffeur. Ces applications utilisent comme mentionné des contrôleurs pouvant être composé de un ou plusieurs calculateurs et de leurs interfaces associées. Suivant leur fonction, ceux-ci peuvent être soit placés au sol le long des voies du véhicule, soit à bord d'un véhicule ou de plusieurs véhicules accolés ou non (plusieurs trains). Afin de permettre un suivi et un contrôle des trains tout au long de la voie, les différents contrôleurs sont connectés entre eux par un ou plusieurs réseaux (aériens, filaires, par caténaires, par rail, etc.).
Pris dans son ensemble, l'architecture des réseaux du traitement de contrôle/commande peut donc être excessivement complexe et présenter une quantité importante d'équipements. Chacun de ces réseaux peut également présenter de fortes longueurs (de l'ordre de 300 m à bord des trains, plusieurs km le long des voies) et est soumis à un environnement électromagnétique sévère.
De plus pour certains de ces réseaux, les liaisons à établir sont de plus du type multipoint, ce qui démultiplie la complexité de routage, surtout en cas d'une défaillance ponctuelle.
Outre ces différentes contraintes, il est impératif d'assurer un fonctionnement correct du train : l'arrêt intempestif d'un train ou un autre dysfonctionnement gênant n'est souhaitable ni pour les passagers, ni pour l'efficience économique des trains, et ni même pour la sécurité des passagers.

Ainsi, au niveau du système de communication adapté à un véhicule (interne et externe au véhicule), il faut pouvoir résoudre les problèmes techniques suivantes :
- D'une part, outre certaines contraintes sur une couche physique de réseau de communication, permettre un débit élevé des données (par exemple débit de 10 Mbits/s utiles), tout en assurant une très haute qualité de transmission (faible taux d'erreur).
   Par exemple, au niveau d'un train, l'environnement électromagnétique est très puissant et le réseau permettant la liaison entre les différents contrôleurs peut être perturbé par de fortes et diverses interférences en particulier si, pour la couche physique du réseau, il est utilisé des câbles dont la qualité n'est pas adaptée à une utilisation directe (câbles de « Catégorie 5 et 6 »). De même pour les équipements à bord des trains, la configuration du réseau peut évoluer, en effet le réseau doit être compatible avec une longueur train modulable (nombre de véhicules variable, par exemple, suite à un accouplement). Ainsi, il est majeur de pouvoir rapidement et simplement reconfigurer (automatiquement) un système de communication complexe, par exemple en cas de doublement de la longueur train.
- D'autre part, outre la complexité, une forte disponibilité de communication doit être assurée, afin que le système puisse tolérer des fautes de façon « transparente » et robuste, en particulier il faut éviter qu'une simple défaillance au niveau du système de communication (réseau interne véhicule, réseau externe sol et liaisons véhicule-sol) ou d'un des équipements connectés remette en cause à elle seule le bon fonctionnement du système de contrôle/commande.
   Pour cette raison, le système de commande est souvent doublé pour tolérer des fautes, en particulier les réseaux et les contrôleurs sont organisés en paires, pour que l'un puisse remplacer l'autre en cas de défaillance, tel que mentionné dans le document EP 1533913 A1 par la commutation entre une liaison de type CPL et une liaison de type radiofréquence.
   Cependant, vis à vis de cette mise en commutation voire en redondance possible des équipements, certains problèmes spécifiques au réseau doivent être résolus :
   a) comme déjà mentionné brièvement, les installations de contrôle commande sont soumises à des contraintes temporelles sévères. Par exemple, certains automatismes ferroviaires peuvent au plus tolérer en cas de panne une interruption de fonctionnement de 3 s environ. C'est plus faible que le temps de reconfiguration d'un routeur de « niveau 3 » (partie intégrante d'une couche physique de réseau) qui demande plusieurs fois ce temps pour remplacer une route réseau défaillante par une autre.
   b) La duplication peut devenir difficile à gérer lorsque un nombre élevé d'équipements ou de calculateurs est connecté à un même réseau.
   c) De plus une défaillance sur le réseau lui-même sera d'autant plus critique qu'elle risque d'affecter simultanément plusieurs contrôleurs ou calculateurs. De même, il faut éviter qu'une panne sur un seul équipement ou sur une interface de communication dans un réseau perturbe les autres.
   d) Au niveau des réseaux situés à bord des trains, il faut rappeler que leurs configurations peuvent être changées, en effet ceux-ci doivent être compatibles avec une longueur train modulable suivant leur nombre de wagons/véhicules. Cette contrainte spécifique doit aussi être prise en compte pour la mise en redondance du réseau.

Considérant ces diverses problématiques, plusieurs solutions ci-après pourraient être envisagées, mais présentent toujours quelques inconvénients que l'invention a pour but d'éviter.

Premièrement, pour permettre qu'un système de communication (réseau) ait un débit élevé sur de fortes longueurs (par exemple, débit d'au moins 10 Mbits/s utiles sur une longueur de 300 m), tout en assurant une très haute qualité de transmission en particulier dans le cas d'environnement sévère (présence autour de forts courants commutés), plusieurs solutions sont connues :
- une solution est d'utiliser des fibres optiques pour les liaisons entre les interfaces de communication, mais ce type de solution peut être difficilement envisageable dans certains cas, par exemple l'emploi de cette technologie peut être très critique à bord des trains en particulier au niveau du coupleur électrique entre deux éléments de train à atteler (par exemple wagons), et ceci sera d'autant plus vrai si l'attelage est de type automatique.
- une autre solution serait de réaliser des liaisons de type ADSL, mais ceci pose un problème, en effet ce type de liaison est normalement prévu pour faire des liaisons point à point, dans le cas d'une application à un réseau multipoints l'architecture devient complexe, de plus une défaillance d'un des contrôleurs lié à une interface de communication de type ADSL aura un impact certain sur l'ensemble du réseau, à moins de réaliser une distribution en étoile, dans lequel cas le câblage associé au réseau deviendrait inévitablement trop important.
- une solution très couramment utilisée est d'utiliser des liaisons à bas débit qui malheureusement apportent beaucoup de contraintes à l'installation de contrôle-commande.

Deuxièmement, pour pouvoir tolérer des fautes et en particulier éviter qu'une simple défaillance au niveau d'un des réseaux ou d'un des équipements connectés remette en cause à elle seule le fonctionnement du système de communication, plusieurs solutions sont connues :
Celle semblant la plus conventionnelle est d'utiliser deux réseaux distincts mis en redondance, mais ce type de solution nécessite une quantité importante de matériel. Par exemple, en partant du fait que chaque contrôleur est composé de deux calculateurs redondants, il est connu pour obtenir une très bonne disponibilité que chaque calculateur soit de préférence connecté par des ports distincts (donc nombreux) aux deux réseaux et émette ses messages à destination des autres contrôleurs ou calculateurs sur chacun des deux réseaux.

Un autre mode de réalisation serait d'utiliser pour le système de communication des réseaux en anneau et de connecter les contrôleurs ou calculateurs redondants à des commutateurs distincts de type « switches ». Mais ce type de solution nécessite que les « switches » concernés soient capables de "rerouter" rapidement les messages par un chemin alternatif en cas de panne localisée (selon par exemple une technique connue sous le nom de « Fast Spanning Tree »). Cette technique maintenant répandue est plutôt adaptée à une couche physique de type « fibre optique » qui est coûteuse à mettre en oeuvre dans les trains et pour les équipements répartis le long des voies ferrées.

Dans le contexte de l'invention, il est également proposé au lecteur de consulter les documents WO 97/31430A et US 2005/040709A1, le premier document proposant un système capable d'utiliser des lignes de transmission électrique pour transmettre des données, faire de la télédétection, ou encore des lectures à distance, et le deuxième document décrivant une structure d'alimentation pour la transmission d'informations entre des composants électriques dans un véhicule automobile, les informations étant transmises sur un bus de données.

Un but de la présente invention est de proposer un système de communication, en particulier adapté à un véhicule de façon interne au véhicule, mais également par extension de façon externe au véhicule pour une communication adaptée entre le véhicule et un réseau au sol ou pour une seule infrastructure en réseau au sol, lequel système ne présente pas les inconvénients de l'état de la technique, tels que ceux précités.

Un premier aspect de l'invention apporte une solution générale quelque soit le point de vue de système de communication interne ou externe au véhicule ou/et au sol.

L'invention décrit un système de communication, en particulier adapté pour un véhicule mais aussi pour toute autre infrastructure en réseau au sol voire dans un bâtiment, et comprenant un réseau de communication entre au moins deux interfaces de communication (tel qu'un Modem) respectivement reliées à un premier contrôleur (avec par exemple deux calculateurs redondants) gérant (c'est-à-dire exécutant voire générant) une application de commande (par exemple pour le guidage d'un train) et un deuxième contrôleur gérant (c'est-à-dire exécutant) également une application de commande qui peut être la même que celle gérée ou exécutée par le premier contrôleur ou toute autre application de commande à exécuter. Les interfaces de communication possèdent par contrôleur au moins un port de communication, à partir duquel une liaison de communication entre les contrôleurs est ainsi assurée, via leurs interfaces de communication respectives.

Pour une transmission d'application de commande entre les deux interfaces de communication, la liaison de communication est avantageusement de type CPL (Courant Porteur en Ligne) et comprend au moins deux liaisons électriquement conductrices connectées à chacun des ports de communication respectifs par l'intermédiaire d'au moins un transformateur de couplage.

Avant de continuer, il est rappelé que la technique CPL a déjà été conçue pour pouvoir réaliser des réseaux informatiques en utilisant comme support les fils du secteur, les liaisons à haut débit se faisant en parallèle du transport de la source d'énergie (courant alternatif [220 V, 50 Hz] ou [110 V, 60 Hz]). Ce choix de technologie a pour avantage de permettre des liaisons à haut débit sur des supports non conventionnels dont les caractéristiques physiques peuvent différer des fils de secteur, de façon à pouvoir optimiser la qualité et la topologie des liaisons de type CPL pour un usage adapté à l'invention.

De même, le réseau CPL a aussi comme atout d'être un réseau de type multipoints et n'a pas besoin d'équipement maître à installer (à la condition de gérer l'accès multiple au medium de transmission à l'aide d'un protocole décentralisé tel que le CSMA - « Carrier Sense Multiple Access » - très couramment utilisé), un seul adaptateur (par exemple un pont Ethernet-CPL) par poste de travail (contrôleur, calculateur, dispositif de commande/d'exécution, « end user »,...) suffit. Chaque interface de communication est connectable en parallèle des deux liaisons de type CPL, à la manière d'un réseau secteur. Ce choix a également pour autre avantage de tolérer des changements sur le réseau, en effet les caractéristiques peuvent évoluer au cours du temps lorsqu'on connecte ou déconnecte un appareil sur le réseau électrique. Cet aspect permet de répondre à la possibilité de reconfiguration automatique du réseau (par exemple, lors du changement de la longueur train suite à un accouplement ou une séparation de véhicules de train). Cet aspect de l'invention protège aussi contre des pannes multiples de communication sur le réseau.

Du fait de l'utilisation de la technique CPL, une transmission de données entre les interfaces de communications (ou par extension entre les contrôleurs « émetteur/récepteur ») est en permanence assurée à un haut débit de transmission sur des trains qui sont en particulier de longueur élevée. En cas de défaillance d'une des liaisons conductrices, le transformateur de couplage, en tant qu'élément avantageusement passif, a pour but de rétablir une répartition d'impédance entre les deux liaisons, telle que la transmission de données soit constamment assurée via la liaison conductrice de type CPL étant intacte. Ainsi, une commutation ou, plus spécifiquement, tout équipement « actif » ou lié à des commandes de re-routage (tel qu'un « Switch » ou autre commutateur de données) n'est avantageusement plus nécessaire. De plus, le temps de redirection des données sur la deuxième liaison CPL est quasi-instantané, ce qui répond aux exigences temporelles particulières de transport ferroviaire lors d'une quelconque défaillance. D'autre part, une commutation de type parallèle ou redondante à partir d'une liaison du type CPL vers un autre type de liaison de communication (telle que du type radiofréquence, ADSL, WiFi, Ethernet, etc) est évitée, ce qui réduit considérablement la complexité de gestion dynamique du système de communication proposé, mais aussi ne nécessite aucun ajout de matériel spécifique à divers types de liaisons de communication. Bien entendu, pour des raisons de sécurité accrue par exemple, une liaison d'un autre type que le type CPL peut être ajoutée en addition des deux liaisons CPL, bien que la liaison de type CPL soit la plus robuste et la plus performante pour la transmission de données visée par l'invention.

Du fait du dédoublement de la liaison de type CPL, une redondance physique de transmission entre les deux interfaces de communication est ainsi rendue possible. Une telle liaison doublée est également très répandue et de haute qualité, vu que les transports en commun usuels (métropolitain, train, tramway, etc.) l'utilise comme câbles adaptés à la signalisation des signaux le long des voies ou des rails. De tels câbles comportent au moins deux liaisons conductrices utilisable pour la technique CPL. Chaque liaison peut comprendre de plus une paire de conducteurs électriques distincts, tel que par exemple au moyen d'un câblage pour la signalisation de transports urbains, par exemple du type K23 bien connu d'un homme du métier, comprenant au moins une paire de câbles torsadés et un blindage. Ceci est particulièrement bien adapté à notre invention, car assure de plus une robustesse contre tout environnement sévère, par exemple lié à des conditions mécaniques difficiles.
Une alimentation électrique superposée type réseau à courant électrique continu, par exemple à basse tension (24V, 72V,...) peut aussi être connectée à au moins une des liaisons de type CPL. Ceci peut permettre en particulier d'assurer un haut débit de données et l'alimentation d'un équipement distant avec une seule paire torsadée sur de grande distance entre les interfaces de communication, tel que pour un train de longueur élevée ou pour des équipements disposés en voie.

De plus, pour pouvoir traiter le problème des réseaux informatiques à haute disponibilité cité dans l'état de la technique et en particulier pour permettre de tolérer des fautes ou défaillances, l'invention permet d'utiliser deux réseaux mis en redondance, cependant sans chercher à avoir réellement deux réseaux distincts donc dédoublés à 100%. Ainsi, la mise en oeuvre de l'invention est plus souple et de plus elle entraîne une réduction importante sur le plan matériel, car le dédoublement de la liaison implique le seul ajout d'un simple transformateur de couplage au lieu d'une nouvelle interface de communication ou de nouveaux modems.
Par ailleurs, Le but recherché est d'assurer simplement une très haute disponibilité du réseau lui-même, sur lequel il suffit de placer des contrôleurs redondants sans besoin de gérer des chemins multiples Ethernet.
Pour cela, la tolérance aux défaillances du système de communication s'appuie sur la définition d'un nouveau principe, qui est le suivant : selon l'invention, chaque contrôleur redondant est connecté à un seul réseau de type CPL (Courant Porteur en Ligne) mais dont la couche physique a été doublée. En particulier, le support est constitué non pas d'une seule paire "cuivre" mais de deux paires "cuivre" en parallèle.
Par rapport à la solution décrite dans l'état de la technique qui pour obtenir une très bonne disponibilité nécessitait que chaque contrôleur soit de préférence connecté par des ports distincts aux deux réseaux et entraînait donc un nombre important de modems (deux pour chaque contrôleur), l'invention a pour avantage de diviser par deux le nombre de modems. Elle consiste à relier par l'intermédiaire d'un circuit électronique très simple chacun des modems CPL (interface de communication avec transformateur de couplage) non plus à une seule paire mais aux deux paires "cuivre" du réseau. Ainsi, à chaque connexion réseau, les deux paires ou liaisons de type CPL du réseau sont connectées en parallèle, mais peuvent ensuite suivre diverses voies selon leur disposition ou leur finalité.

La liaison de type CPL entre les différents modems CPL, pouvant par exemple utiliser un grand nombre de porteuses échelonnées en fréquence, comprend deux paires de fils conducteurs, permettant ainsi une transmission des données qui est fonction des impédances des fils conducteurs.
Si un défaut apparaît sur une des paires/liaison du réseau, tel qu'un court-circuit ou un circuit ouvert, cela provoque une variation de l'impédance et la répartition des données transmises sur les différentes porteuses est réadaptée de telle façon que la liaison est alors maintenue grâce à la grande tolérance de la couche physique de la technologie CPL. Aux points de connexion (outre les ports de communication) du réseau aux interfaces CPL, les deux paires du réseau sont connectées en parallèle, mais des précautions sont prises. L'invention prévoit en effet un dispositif de double connections simple et garantissant entre les deux paires un couplage suffisamment faible afin d'éviter par exemple qu'un court-circuit ou une coupure sur une paire, en particulier proche du point de connexion, puisse simultanément couper ou atténuer fortement les signaux présent sur l'autre paire.

L'invention prévoit ainsi que le transformateur de couplage présente une distribution en impédance entre les liaisons de type CPL telle que si une des liaisons est défectueuse, à cause par exemple d'une coupure, d'un court-circuit, d'un effet mécanique, etc., l'autre liaison assure la transmission d'application de commande. Pour ce faire, il est aussi rappelé que les liaisons de type CPL sont connectées par des paires de conducteurs de préférence exclusivement dédiées à la technique CPL sans présence obligatoire de courant d'alimentation, ce qui allège encore dans ce cas la complexité et le nombre de composantes du système de communication.

Un aspect possible, matériellement et économiquement appréciable est que, au besoin, au moins une portion d'une des liaisons de type CPL est une connexion électrique d'alimentation d'un élément du réseau de communication qui pourrait être déjà installée comme fil secteur dans un wagon ou un train. Bien entendu, les fils secteurs ne présentent pas de propriétés optimales vis-à-vis de câbles de type CPL adaptés à de haut débit dans un environnement sévère, mais peuvent être une alternative possible si une certaine liaison ne requiert pas de hautes performances.

Par la suite, plusieurs formes simples donc avantageuses de transformateurs de couplage seront présentées, ainsi que des possibilités d'améliorer le couplage des liaisons CPL avec une interface de communication.

Des dispositifs tels que des systèmes de contrôle, compensation et d'auto-surveillance du système de communication seront aussi présentés afin d'éviter toute perturbation de communication gênante le cas échéant.

Tous les aspects de l'invention mentionnés apporte ainsi une solution générale quelque soit le point de vue de système de communication interne ou externe au véhicule.

En particulier, l'invention est solution avantageuse â plusieurs configurations de systèmes de communication plus spécifiques :
1) le système de communication est un dispositif interne embarqué : les interfaces de communication, les contrôleurs ou/et au moins une des liaisons de type CPL sont embarqués dans le véhicule, tel qu'un moyen de transport en commun guidé ou non. La liaison CPL, s'étendant le long de tous les véhicules d'un transport en commun tel qu'un train, relie les interfaces de communication souhaitées. Ainsi, si plusieurs véhicules sont couplés, leurs réseaux de communication sont couplés par des liaisons intermédiaires de type CPL, par exemple via un coupleur électrique entre véhicules (au niveau par exemple d'un dispositif d'attelage), via des caténaires d'alimentation électrique des véhicules, via un contact des véhicules avec au moins un rail de guidage, etc. D'autre liaisons intermédiaires peuvent être envisagées, mais rentrent pas dans le cadre souhaité de l'invention.
2) le système de communication est un dispositif interne embarqué répartissable dans plusieurs transports en commun distincts, auquel cas :
   - au moins une portion des liaisons entre deux interfaces de communications est respectivement disposée dans le premier moyen de transport en commun et un deuxième moyen de transport en commun,
   - les deux moyens de transport sont accolables mais dans le cas présent séparés physiquement,
   - l'autre portion des liaisons est constituée de caténaires ou de rails électriques (transmission de voie, adaptée connue type CPL) entre les deux moyens de transport en commun, à défaut ou en sus d'un réseau intermédiaire au sol centralisant la communication avec chacun des moyens de transport en commun.
3) Le système de communication est un réseau au sol (externe et indépendant au véhicule) dont au moins un sous-réseau local est de type CPL selon l'invention qui de plus est adapté à une transmission de type quelconque avec le véhicule en mouvement, par exemple par une portion de liaison de type radiofréquence (aérienne) voire une portion de liaison de type CPL qui peut comporter des canaux ayant une fréquence commune, mais aussi ayant des fréquences distinctes au besoin tel que décrit dans l'état de la technique EP 1533913 A1. Effectivement, la technique CPL est particulièrement bien adaptée le long des voies. Du fait de l'insertion du transformateur de couplage à une sortie d'une interface de communication , un tel réseau-sol peut donc jouir des avantages décrit dans les passages précédents. Ainsi un fort et coûteux ajout de matériel, en particulier sur le long des voies, pourra être avantageusement évité en plaçant de simples transformateurs de couplage aux interfaces existantes.
Plus précisément, les interfaces de communication au sol reliées par les liaisons au sol de type CPL sont ainsi toutes disposées au sol, de préférence le long de la voie du véhicule, dans un réseau de communication au sol ou sous forme de grappes de sous-réseaux consécutifs le long de la voie permettant une communication radio (de préférence de type WLAN en tant que mode nominal) avec des équipements embarqués dans le véhicule, via de préférence un dispositif redondant (et à transmission bilatérale redondante) comprenant au moins un routeur embarqué à transmission/réception de type redondant, par exemple par le biais de deux ports logiques du/des routeur(s) relié aux liaisons physiques de type CPL dans le véhicule.
La liaison entre un contrôleur et son interface de communication selon l'invention se fera de préférence au moyen d'un port physique relié au réseau CPL embarqué ou/et au sol sur lequel deux ports logiques (comprenant chacun une adresse IP, données de routage, etc.) sont créés pour obtenir avantageusement deux passerelles logiques puis physiques de communication par défaut sur chacun des deux routeurs distincts et embarqués dans le véhicule ou/et disposés au sol, créant ainsi à chaque instant au moins deux chemins de communication possibles des équipements dans le train ou/et au sol. Ainsi, deux connexions physiques entre une interface de communication embarquée (et le/les contrôleurs associés) et deux interfaces de communication au sol (et leur/leurs contrôleurs associés) assurent une transmission à débit élevé sur les deux passerelles ou une redondance de haute disponibilité entre les deux passerelles. Ceci est atteint sans ajout ou remplacement de nouvelle interface de communication.

Enfin, un dispositif d'auto-surveillance des interfaces de communication neutralise, au port de communication concerné, une émission permanente de courants, tensions et données parasites en cas de défaillance de l'interface de communication.

Un ensemble de sous-revendications présente également des avantages de l'invention.

Des exemples de réalisation et d'application sont fournis à l'aide de figures décrites :
- Figure 1: une interface de communication munie d'un port de communication de type CPL,
- Figure 2: réseau de communication de type CPL entre deux interfaces de communication,
- Figure 3: exemple de système de communication dans un véhicule ou entre deux véhicules tels que des trains,
- Figure 4: système de communication véhicule-sol par défaut,
- Figure 5: système de communication véhicule-sol avec défaillance d'un routeur de données du véhicule vers le sol.

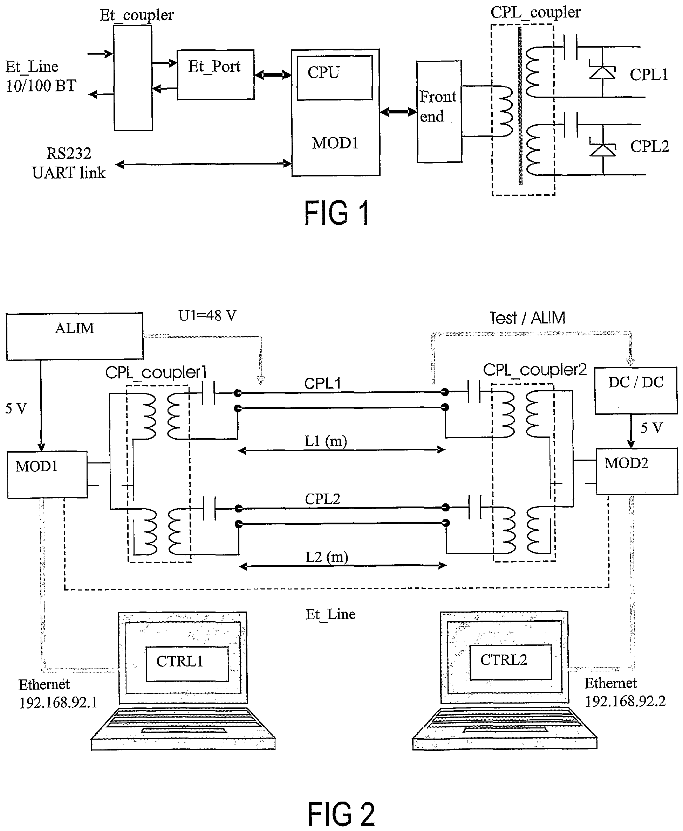

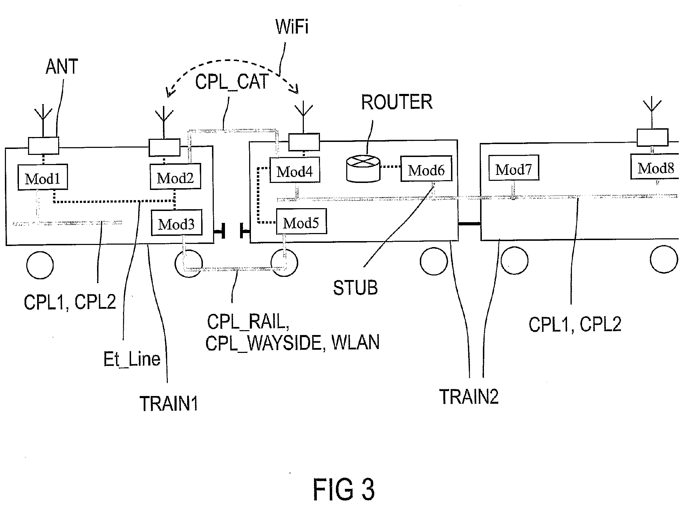

Figure 1 décrit une interface de communication MOD1 munie d'un port de communication « Front End » de type CPL auquel le transformateur électrique de couplage CPL-coupler est connecté afin d'assurer au moins deux liaisons physiques CPL1, CPL2 entre l'interface de communication MOD1 avec un réseau de type CPL par exemple installé dans un train auquel est aussi connecté une autre interface de communication, non représentée dans la figure. Dans cet exemple, chaque liaison CPL1 ou CPL2 comprend une paire de conducteurs électriques distincts, tel que par exemple un groupement de câbles pour la signalisation de transports urbains du type K23 comprenant au moins deux paires de câbles torsadés et éventuellement un blindage. Le transformateur de couplage CPL_coupleur présente une distribution en impédance entre les liaisons CPL1, CPL2 telle que si une des liaisons (par exemple CPL1) ou une liaison s'y rattachant est défectueuse, à cause par exemple d'une coupure, d'un court-circuit, d'un effet mécanique, etc., l'autre liaison (par exemple CPL2) assure la transmission d'une application de commande via de l'interface de communication MOD1, au moyen par exemple d'un processeur CPU. Cette application de commande est dans la pratique gérée par un contrôleur (non représenté) comprenant par exemple un calculateur (ou plusieurs calculateurs assurant une redondance), lequel est relié à l'interface de communication MOD1, à titre d'exemple simple, par l'intermédiaire d'une liaison Ethernet Et_Line de type 10/100 BT et d'autres éléments de couplage de type Ethernet (coupleur Et-coupler ; port Et_Port) à l'interface MOD1. D'autres ports physiques de communication à l'interface MOD1 peuvent bien entendu être envisagés, tel que celui représenté pour une liaison UART Link de type RS232 ou d'autres liaisons de type Ethernet ou CPL. Dans le sens de l'invention, l'emploi de liaisons ou de portions/paires de conducteurs exclusivement dédiées à la technique CPL vers un réseau lui-même de type CPL (par exemple longeant le véhicule) est principalement recommandé, mais des portions déjà existantes et d'autre type (et si possible de faibles longueurs ou peu exposées à des perturbations) seront encore utilisée du moins entre un contrôleur ou un exécuteur d'application de commande et une interface de commande. Toute liaisons ou paires de conducteurs dédiées à la technique CPL ne nécessite pas obligatoirement la présence de courant d'alimentation tel que la technologie CPL le prévoit. Par ailleurs, au moins une portion d'une des liaisons CPL1, CPL2) pourrait être une connexion électrique d'alimentation déjà installée dans un véhicule pour un élément du réseau de communication. Il est également notifié qu'à la sortie « côté CPL » du transformateur de couplage CPL_coupleur des atténuateurs à faible atténuation (maximum quelques dB) sont prévus, par exemple au moyen d'un réseau de résistances/d'impédances disposées/distribuées en série avec les deux liaisons CPL1, CPL2. Ceux-ci améliorent la qualité du transformateur de couplage CPL_coupleur, en ce sens qu'il est évité qu'un court-circuit inattendu par exemple à la sortie du transformateur de couplage ou sur les liaisons CPL1, CPL2 coupe tous les signaux sur les deux paires CPL1, CPL2 de conducteurs. Ceci s'applique aussi si une distribution de l'impédance au port de communication au moyen de la résistance d'adaptation de ligne au niveau de l'interface de communication est insuffisante ou inutilisable. D'autres solutions sont aussi possibles dans ce sens :
- on fait en sorte que les transformateurs de couplage présentent une impédance série suffisante pour éviter qu'un court-circuit local ne coupe le signal sur les deux réseaux,
- des brins en dérivation (voir STUB dans figure 3) d'un réseau de type CPL ont une longueur minimale de 20 cm environ ce qui assure une impédance suffisante en cas de court-circuit de l'interface MOD1 ou dans une liaison CPL1 ou CPL2,
- de même au lieu de rajouter des atténuateurs, il peut être aussi envisagé d'utiliser comme impédance-série la résistance d'adaptation de ligne qui est usuellement déjà présente au sein de l'interface de communication MOD1 telle qu'un modem; ainsi il suffit de déplacer cette impédance en la distribuant sur chacune des deux connexions CPL1, CPL2 au réseau de type CPL. Cet aspect de l'invention permet ainsi de pouvoir obtenir une architecture simple de réseau de type CPL à haute disponibilité tolérant aux pannes, en utilisant les propriétés de la couche physique CPL. De plus, cette nouvelle architecture a pour avantage de créer une redondance passive, à chaque connexion d'un réseau interne au véhicule, en général matérialisé par au moins une paire de liaisons de type CPL embarquée et disposée le long du véhicule auxquelles viennent se connecter en dérivation chaque paire de liaisons CPL1, CPL2 de la figure 1) les deux paires CPL1, CPL2 du réseau sont connectées en parallèle. Cette solution évite la nécessité du double raccordement des brins redondants ayant le double désavantage de doubler le nombre d'interfaces tel que des modems et de compliquer la gestion de l'adressage logique (par exemple 2 adresses IP par contrôleur.

Un exemple avantageux de la technique proposée est donc principalement fondée sur :
- un support constitué de deux paires "cuivre" en parallèle,
- un nouveau dispositif permettant de relier chacune des interfaces de communication aux deux paires "cuivre" en parallèle tout en garantissant entre celles-ci un couplage suffisamment faible. L'objet étant d'avoir au niveau de chaque interface de communication non plus une seule mais deux connections pour la couche physique,
- selon l'invention, plusieurs schémas de réalisation sont possibles, mais seules ici sont proposés les solutions les plus simples ne faisant appel qu'à des composants passifs.

Par exemple, une possibilité de double connexion de l'interface de communication MOD1 à un réseau de type CPL pourra être réalisée simplement :
- soit en disposant un troisième enroulement séparé (telle qu'une troisième bobine conductrice en dérivation sortante d'un transformateur classique à deux bobines) sur le transformateur de couplage CPL_coupleur au port de chaque interface MOD1 et respectivement connectés à une des liaisons CPL1, CPL2,
- soit en disposant un premier puis un second transformateur de sortie sur chaque interface MOD1, respectivement connectés à une des liaisons CPL1, CPL2,
- ou soit en ne modifiant pas l'interface MOD1, mais en insérant un circuit adaptateur entre l'interface MOD1 et les deux liaisons de réseau de type CPL. Ce circuit adaptateur pourra être formé simplement d'un transformateur à trois enroulements séparés (ou tout schéma équivalent utilisant deux transformateurs).

Pour la connexion d'une interface de communication au réseau de type CPL du système de communication adapté au véhicule CPL, l'invention préconise aussi l'emploi de transformateurs ou d'enroulements séparés pour d'autres raisons, en particulier afin :
- d'éviter qu'un court circuit à la terre ou autre d'une des paires de conducteurs se répercute sur l'autre,
- de pouvoir adjoindre des signaux électriques éventuellement distincts (tel qu'au moyen d'alimentations par exemple superposées) ou signaux de commande différents sur les deux paires de conducteur. Dans ce but, au moins pour une des liaisons CPL1, CPL2, un condensateur est placé en série avec un enroulement de sortie du transformateur de couplage, afin de ne pas court-circuiter les basses fréquences électriques. Ceci est illustré à la figure 1 en sortie du transformateur de couplage CPL_coupleur,
- de donner la possibilité de compléter l'invention par un dispositif de détection des pannes. L'objet ici étant, par exemple, d'injecter sur chaque paire de conducteur un signal (courant ou tension) continu afin de déterminer si une panne existe (coupure ou court-circuit) au sein de l'une des deux. Plus généralement, l'interface de communication MOD1, le contrôleur associé ou/et une des liaisons CPL1, CPL2 est reliée à un module de surveillance de panne, tel qu'un injecteur de courant continu, ou un générateur de tension, placé en aval d'au moins un de ces éléments et dont le courant, ou la tension, est mesurable en amont au moins d'un de ces éléments.

De même des diodes de protection, telles que les diodes disposées en parallèle sur chaque de paires de conducteurs selon la figure 1, pourront être rajoutées en parallèle sur chaque sortie d'interface de communication ou de liaisons/réseau de type CPL.

Pour parfaire cette solution, l'invention pourra être complétée par l'ajout et la création d'un mécanisme d'auto surveillance des interfaces de communication (modems) afin qu'un éventuel modem en émission permanente suite à une panne puisse se déconnecter automatiquement.

Figure 2 illustre selon le principe de figure 1 un système de communication adapté pour un véhicule et comprenant un réseau de communication entre au moins deux interfaces MOD1, MOD2 de communication respectivement reliées à un premier contrôleur CTRL1 gérant ou générant une application de commande et un deuxième contrôleur CTRL2 ici exécutant la même application de commande, et pour lequel les interfaces de communication possèdent par contrôleur au moins un port de communication physique, à partir duquel une liaison de communication entre les deux interfaces est possible. Pour une transmission d'application de commande entre les deux interfaces de communication, la liaison de communication est de type CPL (Courants Porteurs en Ligne) comprenant au moins deux liaisons électriquement conductrices CPL1, CPL2 connectées à chacun des ports de communication respectifs par l'intermédiaire d'au moins un transformateur de couplage CPL_coupleur. Ce dispositif simple de communication permet de tester les performances de commutation et de transmission de deux liaisons CPL1, CPL2 de type CPL, par exemple pour des longueurs de transmission L1, L2 différentes. Ce dispositif de test a permis de mesurer, en particulier pour une longueur L1 élevée, une bande passante sur la liaison CPL1 de l'ordre de 30 Mb/s pour 300m et de 10 Mb/s jusqu'à un kilomètre, donc adapté par exemple à un train de longueur variable comme à une liaison entre deux trains non accolés sur un trajet ou bien entre un véhicule et des éléments de communication d'un réseau au sol qui peuvent être espacés suivant les performances du système de type CPL. Bien entendu, un réseau de type CPL peut être utilisé en configuration multi-point et ainsi plus de deux interfaces de communication telles que MOD1, MOD2 peuvent être mises en communication en les disposant en dérivation de deux canaux « centraux » de type CPL qui seraient par exemple eux-mêmes disposés le long d'un train. Il est à noter dans cet exemple de réalisation de système de communication, une alimentation électrique ALIM dite « superposée » (fournissant ici une tension U1 de 48 V) est connectée en aval de la liaison CPL1 à la sortie CPL de la première interface de communication MOD1. Cette alimentation ALIM peut être complétée d'un dispositif de test « Test/ALIM» de la liaison CPL1 ou/et peut servir de dispositif de sous-alimentation « Test/ALIM» (et convertisseur DC/DC sur 5V) pour la deuxième interface de communication MOD2, lequel dispositif étant situé en amont de la liaison CPL1. Grâce au dispositif de la figure 2 utilisé en tant que banc d'essai, il a été mesuré que le réseau entre les contrôleurs CTRL1, CTRL2 est résistant à des connexions coupées, croisées ou en court circuit au niveau d'au moins une des liaisons CPL1, CPL2. Cette grande robustesse permet d'envisager la réalisation d'un réseau à haute disponibilité tolérant aux pannes réalisé avec ce type de connexion de type CPL en redondance passive. Cette solution évite la nécessité du double attachement physique d'un port de communication sur des brins redondants qui a le désavantage de doubler le nombre d'interfaces ou de ports physiques.

Figure 3 présente un exemple de réalisation possible de système de communication comprenant plusieurs sous-systèmes selon l'invention :
- un système de communication embarqué dans un premier véhicule TRAIN1 ou un système de communication embarqué dans un deuxième véhicule de type train TRAIN2,
   - un système de communication entre deux véhicules accolés tel que des wagons pour le deuxième véhicule de type train TRAIN2,
   - un système de communication entre les véhicules ou trains TRAIN1, TRAIN2 via des caténaires, des voies ferroviaires, un dispositif radio (aérien) ou/et un réseau intermédiaire sol.

Le véhicule TRAIN1 comprend trois interfaces de communication MOD1, MOD2, MOD3 et deux modules de transmission radiofréquences ANT. La première interface MOD est relié à une liaison de type CPL selon l'invention qui est interne au véhicule TRAIN1. La même première interface MOD1 comprend aussi deux autres ports physiques, l'un vers un des modules de transmission radiofréquences ANT pour une transmission radio, l'autre relié à un câble Ethernet Et_Line, lui-même connecté à un port physique de la deuxième interface MOD2 tel qu'à titre optionnel selon la figure 2. La même liaison Ethernet Et_Line est aussi connectée, via un commutateur (switch) de type Ethernet non représenté, à la troisième interface MOD3, qui possède un port de communication supplémentaire de type CPL selon l'invention permettant une transmission de signaux CPL vers les rails ferroviaires CPL_RAIL (avec adaptation pour transmission de type CPL selon l'invention) ou des câbles au sol CPL_WAYSIDE de signalisation ferroviaires de type CPL en direction ou via un réseau de communication au sol ou de l'autre train TRAIN2. La deuxième interface MOD2, outre son port de type Ethernet, possède aussi un port vers le deuxième module ANT de transmission radiofréquence ou WiFi ainsi qu'un port de communication de type CPL selon l'invention qui peut donc être relié via un transformateur de couplage à des caténaires CPL_CAT de voies ferroviaires CPL_WAYSIDE afin de permettre une liaison vers l'autre véhicule TRAIN2 ou un réseau au sol. Dans cet exemple de réalisation, les deux véhicules TRAIN1, TRAIN2 ont donc trois types de connexions diverses, dont deux de types CPL qui assurent une disponibilité, une résistance accrue aux perturbations de l'environnement, une double redondance et aucun effort de commutation en cas de défaut de transmission.

De même, le train TRAIN2 avec deux wagons ou véhicules accolés comprend au moins deux liaisons CPL1, CPL2 « centrale » et disposées en parallèle le long des véhicules en transitant par le dispositif de couplage électrique (lui-même pouvant être de type CPL selon l'invention) entre les véhicules attelés. A l'exception d'une interface de communication MOD5, toutes les autres interfaces de communications MOD4, MOD6 dans le premier véhicule et MOD7, MOD8 dans le deuxième véhicule sont reliés par des brins STUB aux liaisons centrales CPL1, CPL2 permettant de minimiser une perturbation sur les liaisons CPL1, CPL2 si un court-circuit a lieu au niveau d'au moins une interface de communication. L'interface MOD5 du deuxième TRAIN2 représente un pont Ethernet-CPL comme la troisième interface MOD3 du premier train TRAIN1 décrite précédemment, la liaison Ethernet étant interne au véhicule TRAIN2 et la liaison CPL étant dirigée vers l'extérieur du véhicule. L'interface MOD4 possède quatre ports physiques, un de type radiofréquence ANT, ou/et de type WiFi, un de type Ethernet et deux ports de type CPL selon l'invention (un port sur une liaison CPL_CAT via caténaires et un port sur la liaison centrale CPL1, CPL2). Au besoin, plusieurs catégories de ponts entre les différents types peuvent être réalisées, suivant les options de l'interface de communication MOD4. Ceci augmente la possibilité de redondance ou le débit des communications ou permet de commuter sur des liaisons forcées quand d'autres sont surchargées ou inutilisables (pas de caténaires, perturbations électromagnétiques intenses, tunnel, barrière de transmission aérienne...). L'interface MOD6 possède, en plus de son port de type CPL selon l'invention, un port de communication vers un routeur ROUTER embarqué qui peut gérer le routage de données de façon interne dans le deuxième train TRAIN2, mais aussi à l'extérieur du TRAIN2 avec l'autre train TRAIN1 ou un réseau au sol centralisant la communication avec ou entre chacun des moyens de transport TRAIN1, TRAIN2.

En résumé, le système de communication selon l'invention couvre avantageusement au moins trois aspects possibles adaptés à un ou plusieurs véhicules pour lesquels :
a) les interfaces de communication, les contrôleurs ou/et au moins une des liaisons CPL1, CPL2 sont embarqués dans le véhicule, tel qu'un moyen de transport en commun TRAIN1 guidé C'est le cas pour un train type mono-véhicule autoguidé.
b) le moyen de transport en commun TRAIN1 comprend plusieurs véhicules accolés dont les réseaux de communication sont couplables par des liaisons intermédiaires CPL1, CPL2 de type CPL, par exemple via un coupleur électrique au niveau d'un dispositif attelage entre véhicules, via des caténaires d'alimentation électrique des véhicules, via un contact des véhicules avec au moins un rail de guidage, etc, ou à défaut ou en sus d'un réseau intermédiaire au sol ou aérien gérant la communication avec chacun des véhicules. C'est le cas pour un train avec plusieurs unités-véhicules arrimés.
c) - au moins une portion des liaisons CPL1, CPL2 entre deux interfaces de communication est respectivement embarquée dans le premier moyen de transport en commun TRAIN1 et un deuxième moyen de transport en commun TRAIN2,
   - les deux moyens de transport TRAIN1, TRAIN2 sont séparés et accolables physiquement,
   - l'autre portion des liaisons CPL1, CPL2 est constituée de caténaires ou de rails électrique entre les deux moyens de transport en commun TRAIN1, TRAIN2, à défaut ou en sus d'un réseau intermédiaire au sol ou aérien gérant la communication avec chacun des moyens de transport en commun.
C'est le cas pour deux trains se succédant sur une voie, accouplables et possédant respectivement au moins une unité-véhicule.

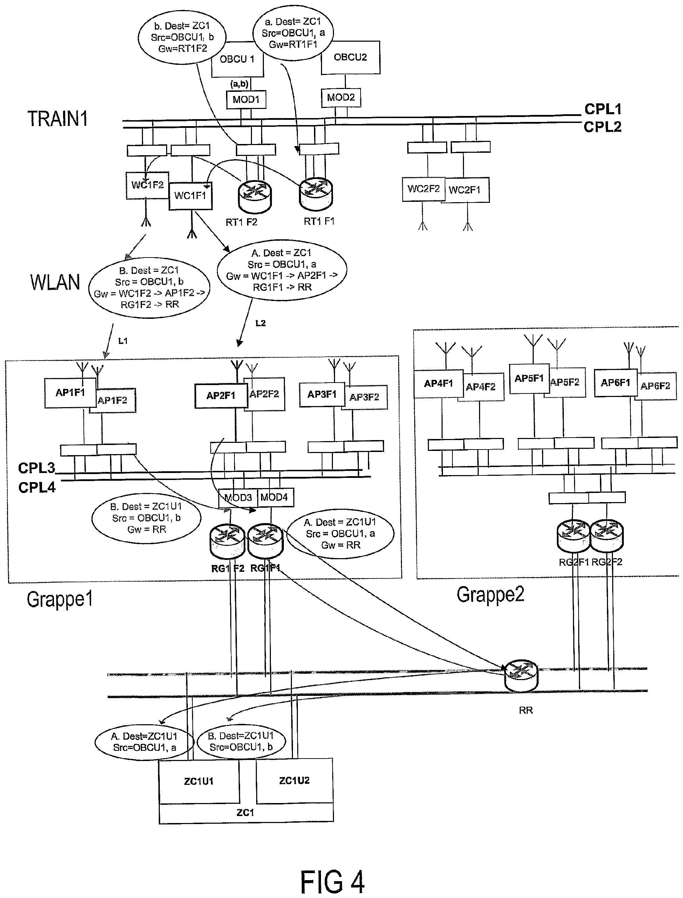

Figure 4 présente un exemple de système de communication adapté à un véhicule pour une communication véhicule-sol selon l'invention et en fonctionnement par défaut, c'est-à-dire sans défaillance de transmission. Des contrôleurs OBCU1, OBCU2 (ou calculateurs, unités de commande ou d'exécution, « end users » comme téléphones mobiles, caméras ou autre appareils multi-medias, etc) sont reliés aux liaisons centrales CPL1, CPL2 de type CPL d'un train via leur interface de communication respective MOD1, MOD2 selon l'invention. Une liaison physique (par exemple du type Ethernet) entre le contrôleur OBCU1 et l'interface de communication MOD1 avec deux ports logiques a, b comprenant respectivement une adresse IP et des données de routage. Par exemple, les bulles de références de routage sur la figure 4 sont à comprendre de la façon suivante, sur l'exemple d'un message B de données envoyé du véhicule vers le sol dont les caractéristiques sont::
- destination vers un serveur au sol ZC1: Dest = ZC1,
- source du port b du contrôleur OBCU1: Src = OBCU1, b
- route via routeur embarqué RT1F2 : Gw = RT1F2

Analogiquement, les données du contrôleur OBCU1 sont aussi à transmettre sur le port logique a via un deuxième routeur RTF1F1 jusqu'au serveur au sol ZC1. Les deux routeurs embarqués RTF1F1, RTF1F2 sont également couplés aux liaisons embarquées CPL1, CPL2 de type CPL selon l'invention et peuvent donc recevoir des données des interfaces de communication MOD1, MOD2 sous un seul type de transmission, à savoir avantageusement le type CPL selon l'invention. Les routeurs embarqués RT1F1, RT1F2 se chargent de transmettre ensuite les données des deux ports logiques a, b vers des émetteurs (/récepteurs) radiofréquence embarqués WC1F1, WC1F2 possédant dans cet exemple des radiofréquences d'émission F1, F2 distinctes en vue d'une communication redondante vers le réseau au sol. Les radiofréquences F1, F2 ne doivent cependant pas être obligatoirement distinctes.
Le principe de transmission par voie de type CPL est le même pour un deuxième contrôleur OBCU2 ou tout autre contrôleur embarqués jusqu'aux routeurs embarqués RT1F1, RT1F2. Les routeurs embarqués RT1F1, RT1F2 peuvent cependant rediriger les données à transmettre au réseau sol via des émetteurs (/récepteurs) supplémentaires WC2F1, WC2F2 de type radiofréquence adaptés aux radiofréquences d'émission F1, F2 distinctes (ou non), selon un algorithme de choix du meilleur client pour chaque fréquence. Une transmission bidirectionnelle entre le véhicule et le sol est possible sur chacune des fréquences F1, F2 ou/et via les deux ports a, b. Ainsi les ports de communication des routeurs embarqués ou des interfaces de communication sont des ports d'entrée et de sortie.

Le système de communication selon l'invention s'étend donc jusqu'au sol sous forme d'un réseau ou d'un ensemble de sous-réseaux Grappe 1, Grappe 2, RG1F1, RG1F2, etc., ayant également les interfaces de communication MOD3, MOD4 reliées par les liaisons CPL3, CPL4 de type CPL disposées au sol, c'est-à-dire dans un réseau de communication au sol Grappe 1, Grappe 2, RG1F1, RG1F2, etc., permettant une communication radio (par exemple du type WLAN) supplémentaire avec les équipements embarqués dans le véhicule, via le dispositif redondant comprenant les deux routeurs embarqués RT1F1, RT1F2 à transmission/réception de type redondant.

De cette façon, une communication est réalisée entre au moins le premier contrôleur OBCU1 et l'interface de communication MOD1 associée, tous deux embarqués dans le véhicule, et au moins un deuxième contrôleur RG1F1, RG1F2, ZC1U1, etc. et une interface de communication MOD3, MOD4 associée, tous deux disposés dans un deuxième réseau de communication au sol. Bien entendu, des éléments de transition sont prévus comme des points d'accès AP1F1, AP1F2, AP2F1, AP2F2, ... ; AP4F1, AP4F2, AP5F1, AP5F2,... du type WLAN et espacés le long du trajet du train au sol pour recevoir ou émettre les signaux radiofréquences au/du sol et qui, par l'intermédiaire d'interfaces de communication MOD3, MOD4, sont reliés à un sous-réseau Grappe1, Grappe2,... comprenant des liaisons CPL3, CPL4 de type CPL selon l'invention. Des couples de points d'accès AP1F1, AP1F2, AP2F1, AP2F2, ... ; AP4F1, AP4F2, AP5F1, AP5F2, ... comprennent respectivement un canal de transmission/réception à la radiofréquence F1 et un canal de transmission/réception à l'autre radiofréquence F2.
Ainsi, l'interface de communication embarquée MOD1 est avantageusement reliée à au moins une interface de communication MOD3, MOD4 par deux liaisons L1, L2, chacune comprenant une portion de type CPL à bord du véhicule et une autre portion de type CPL au sol et une portion aérienne pour une radio-transmission entre le véhicule et le sol.

Les points d'accès AP1F1, AP1F2 ; AP2F1, AP2F2 ; AP3F1, AP3F2 sont reliés au réseau sol via la deuxième portion de liaisons CPL3, CPL4 de type CPL menant aux ports de deux routeurs au sol RG1F1, RG1F2 via des interfaces de communications MOD3, MOD4 selon l'invention et disposés aussi au sol. Les points d'accès AP1F1, AP1F2 ; AP2F1, AP2F2 ; AP3F1, AP3F2 comprennent respectivement un canal de transmission/réception de type radiofréquence avec un des émetteurs/récepteurs radio embarqués WC1F1, WC1F2 ; WC2F1, WC2F2. Chacun des deux routeurs distincts RG1F1, RG1F2 disposés au sol a au moins un port physique et au moins deux ports logiques, de façon à être, via son interface de communication MOD3, MOD4, en communication avec chaque point d'accès AP1F1, AP1F2 ; AP2F1, AP2F2 ; AP3F1, AP3F2. Les routeurs au sol RG1F1, RG1F2 offrent de plus deux ports physiques reliés à un routeur central RR d'un réseau redondant de type à transmission optique au sol, lui-même relié au deuxième contrôleur ZC1.

Il est important de noter que l'invention dans son ensemble apporte un aspect de redondance très avantageux, car toute liaison entre un contrôleur et son interface de communication peut se faire par au moins un port physique et au moins deux ports logiques, comprenant par exemple deux adresses IP et des données de routage, pour avoir par défaut au moins deux passerelles de communication véhicule-sol sur chacun des deux routeurs distincts RT1F1, RT1F2 ou par défaut deux passerelles embarquées de communication véhicule-véhicule. Ainsi aucun commutateur physique au port de communication de l'interface n'est nécessaire, car la redondance logique sur un support physique assure en permanence et au minimum un dédoublement physique possible à partir de la sortie de l'interface de communication et de son transformateur de couplage.

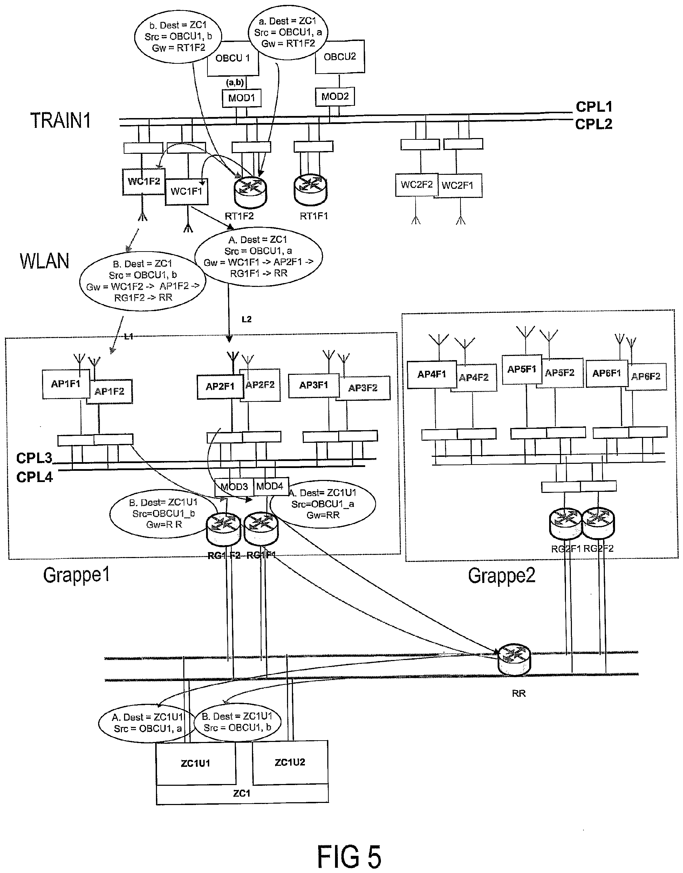

La figure 5 présente le système de la figure 4 avec un cas de panne du routeur embarqué RT1F1 (destiné à router une communication à la radiofréquence F1 depuis l'interface MOD1 ou le port logique a de son contrôleur OBCU1 embarqué vers le serveur au sol ZC1). Cette défaillance pourrait aussi provenir du routeur au sol RG1F1 correspondant à la radiofréquence F1. Dans ce cas, les routeurs embarqué RT1F2 dans le véhicule et ceux au sol RG1F2 en mode nominal de routage de paquets sur un réseau de type WLAN sur l'autre radiofréquence F2 prennent en charge le routage de paquets sur les réseaux de type WLAN prévus sur les deux radiofréquences F1, F2 (rappel : les deux radiofréquences F1, F2 pourraient cependant être identiques). Ici, le message venant du deuxième port logique pour lequel une défaillance d'ordre physique sur son routeur par défaut est constatée est alors directement « re-routé » au niveau de la liaison CPL embarquée selon l'invention vers une liaison physique intacte, par exemple la liaison jusqu'au routeur embarqué RT1F2 où l'autre port logique utilisé est transmis sans perturbation. Ensuite, le routeur RT1F1 orientera comme pour figure 4 le signal à transmettre perturbé selon ses données logiques vers l'émetteur/récepteur radio WC1F2 voulu. Le routage sans perturbation du signal suivant le premier port logique est inchangé. Ainsi, en cas de défaillance dans le véhicule, un nouveau routage interne au véhicule de type CPL selon l'invention est très simplement possible de façon avantageusement transparente pour le contrôleur OBCU1, sans que le routage (physique) vers l'extérieur du véhicule ne soit changé, car, à ce niveau de la transmission, il reste déjà assuré de façon logique. Ceci évite ainsi de modifier toute la configuration de routage des réseaux et sous-réseaux en particulier par voie aérienne jusqu'au sol dans cet exemple où la défaillance provient du véhicule. La redondance des ports logiques permet ainsi un routage dynamique minimisant des efforts usuels de reconfiguration de ports physiques.

Plus généralement et en cas de panne du routeur embarqué RT1F2 ou/et du routeur au sol RG1F2 correspondant à une des deux liaisons de type radiofréquence (ayant ou non une radiofréquence commune), les routeurs véhicule et sol RT1F1, RG1F1 en mode nominal de routage de paquets sur un réseau de type WLAN sur l'autre liaison intacte de type radiofréquence prennent avantageusement en charge le routage de paquets sur les réseaux de type WLAN prévus sur les deux liaisons de type radiofréquence.

De la même façon, une défaillance au sol n'impose plus de reconfiguration totale ou du moins de la voie aérienne et du réseau du véhicule par l'emploi de dédoublement de la couche dite logique sans nouvelle commutation par dédoublement non souhaitée de la couche dite physique au sol grâce aux liaisons CPL3, CPL4 de type CPL selon l'invention.

Du fait de sa robustesse, le système de communication présenté dans l'invention pourrait également s'adapter à un système comprenant un réseau de communication purement au sol (sans intervention d'un véhicule), tel que pour un immeuble ou pour un lieu où l'environnement serait par exemple lié à des perturbations sévères, et pour lequel une grande fiabilité de communication est exigée. Outre le domaine des transports en commun de type terrestre (train), maritime (ferry) ou aérien (avion de ligne), ce système est adapté pour tout autre véhicule individuel (voiture, tracteur avec ou sans remorque, avion particulier, etc).

## Revendications

1. Système de communication adapté pour un véhicule comprenant un réseau de communication entre au moins deux interfaces de communication (MOD1, MOD2) respectivement reliées à un premier contrôleur (CTRL1) gérant une application de commande et un deuxième contrôleur (CTRL2) gérant une application de commande,
et pour lequel les interfaces de communication possèdent par contrôleur au moins un port de communication, à partir duquel une liaison de communication est possible,
et pour une transmission d'application de commande entre les deux interfaces de communication, la liaison de communication est de type CPL (« Courant Porteur en Ligne ») comprenant au moins deux liaisons électriquement conductrices (CPL1, CPL2) connectées à chacun des ports de communication respectifs par l'intermédiaire d'au moins un transformateur de couplage (CPL_coupleur) **caractérisé en ce que**,
chaque liaison (CPL1 ou CPL2) comprend une paire de conducteurs électriques distincts.

2. Système selon revendication 1, pour lequel la paire de conducteurs électriques distincts comprend un câblage pour la signalisation de transports urbains du type K23 comprenant au moins une paire de câbles torsadés et éventuellement un blindage.

3. Système selon revendication 1 ou 2, pour lequel le transformateur de couplage présente une distribution en impédance entre les liaisons (CPL1, CPL2) telle que si une des liaisons est défectueuse, l'autre liaison assure la transmission d'application de commande.

4. Système selon une des revendications précédentes, pour lequel les liaisons (CPL1, CPL2) sont connectées par des paires de conducteurs exclusivement dédiées à la technique CPL sans présence de courant d'alimentation superposé.

5. Système selon une des revendications précédentes, pour lequel au moins une portion d'une des liaisons (CPL1, CPL2) est une connexion électrique d'alimentation d'un élément du réseau de communication.

6. Système selon une des revendications précédentes, pour lequel le transformateur de couplage est composé d'au moins un troisième enroulement conducteur relié à une des liaisons (CPL1, CPL2).

7. Système selon une des revendications précédentes, pour lequel le transformateur de couplage est composé de deux transformateurs électriques respectivement connectés à une des liaisons (CPL1, CPL2).

8. Système selon une des revendications précédentes, pour lequel le transformateur de couplage a une impédance série ou/et une inductance de fuite minimale.

9. Système selon une des revendications précédentes, pour lequel si une distribution de l'impédance à un port de communication au moyen de la résistance d'adaptation de ligne au niveau de l'interface de communication est insuffisante ou inutilisable, au moins un atténuateur, tel qu'un réseau de résistances dont l'atténuation est de l'ordre de quelques décibels, est disposé entre les deux liaisons (CPL1, CPL2) et le port de communication.

10. Système selon une des revendications précédentes, pour lequel les deux liaisons (CPL1, CPL2) comprennent des fréquences porteuses électriques distinctes ou/et transmettent des signaux de commande différents.

11. Système selon une des revendications précédentes, pour lequel au moins pour une des liaisons (CPL1, CPL2) un condensateur est placé en série avec un enroulement de sortie du transformateur de couplage, afin de superposer divers courants de porteuses électriques et une alimentation à basse fréquence ou en courant continu.

12. Système selon une des revendications précédentes, pour lequel l'interface de communication, le contrôleur ou/et une des liaisons (CPL1, CPL2) est reliée à un module de surveillance de panne, tel qu'un injecteur de courant continu, ou un générateur de tension, placé en aval d'au moins un de ces éléments et dont le courant, ou la tension, est mesurable en amont au moins d'un de ces éléments.

13. Système selon une des revendications précédentes, pour lequel les interfaces de communication, les contrôleurs ou/et au moins une des liaisons (CPL1, CPL2) sont embarqués dans le véhicule, tel qu'un moyen de transport en commun (TRAIN1).

14. Système selon revendication 13, pour lequel le moyen de transport en commun (TRAIN1) comprend plusieurs véhicules accolés dont les réseaux de communication sont couplables par des liaisons intermédiaires (CPL1, CPL2) de type CPL, par exemple via un coupleur électrique au niveau d'un dispositif attelage entre véhicules, via des caténaires d'alimentation électrique des véhicules, via un contact des véhicules avec au moins un rail de guidage, etc, ou à défaut ou en sus d'un réseau intermédiaire au sol ou aérien gérant la communication avec chacun des véhicules.

15. Système selon revendication 13 ou 14, pour lequel :
- au moins une portion des liaisons (CPL1, CPL2) entre deux interfaces de communication est respectivement embarquée dans le premier moyen de transport en commun (TRAIN1) et un deuxième moyen de transport en commun (TRAIN2),
- les deux moyens de transport (TRAIN1, TRAIN2) sont séparés et accolables physiquement,
- l'autre portion des liaisons (CPL1, CPL2) est constituée de caténaires ou de rails électrique entre les deux moyens de transport en commun (TRAIN1, TRAIN2), à défaut ou en sus d'un réseau intermédiaire au sol ou aérien gérant la communication avec chacun des moyens de transport en commun.

16. Système selon une des revendications précédentes, pour lequel les interfaces de communication (MOD3, MOD4) reliées par les liaisons (CPL3, CPL4) de type CPL sont disposées au sol, c'est-à-dire dans un réseau de communication au sol (Grappe 1, Grappe 2, RG1F1, RG1F2, etc.) permettant une communication radio (WLAN) avec des équipements embarqués dans le véhicule, via un dispositif redondant comprenant deux routeurs embarqué à transmission/réception de type redondant.

17. Système selon une des revendications précédentes, pour lequel :
- au moins le premier contrôleur (OBCU1) et l'interface de communication (MOD1) associée sont embarqués dans le véhicule et au moins un deuxième contrôleur (RG1F1, RG1F2, ZC1U1, etc.) et une interface de communication (MOD3, MOD4) associée sont disposés dans un deuxième réseau de communication au sol,
- l'interface de communication embarquée (MOD1) est reliée à au moins une interface de communication (MOD3, MOD4) par deux liaisons (L1, L2) comprenant respectivement une portion (CPL1, CPL2) de type CPL à bord du véhicule et une autre portion (CPL3, CPL4) de type CPL au sol et une portion aérienne pour une radio-transmission entre le véhicule et le sol.

18. Système selon revendication 17, pour lequel l'interface de communication (MOD1) embarquée est reliée via une première portion de liaisons (CPL1, CPL2) à deux routeurs de véhicule (RT1F1, RT1F2) transmettant ou/et recevant des données vers/du sol via au moins deux émetteurs/récepteurs radio embarqués (WC1F1, WC1F2 ; WC2F1, WC2F2), ayant soit la même radiofréquence soit deux radiofréquences (F1, F2) distinctes.

19. Système selon revendication 18, pour lequel une liaison entre un contrôleur et son interface de communication (MOD1) se fait par au moins un port physique et au moins deux ports logiques, comprenant par exemple deux adresses IP et des données de routage, pour avoir par défaut deux passerelles de communication véhicule-sol ou véhicule-véhicule sur chacun des deux routeurs distincts (RT1F1, RT1F2) et embarqués.

20. Système selon une des revendications 18 à 19, pour lequel :
- des couples de points d'accès de type émetteur/récepteur radio (AP1F1, AP1F2 ; AP2F1, AP2F2 ; AP3F1, AP3F2) sont répartis au sol le long du trajet du véhicule et comprennent respectivement un canal de transmission/réception de type radiofréquence avec un des émetteurs/récepteurs radio embarqués (WC1F1, WC1F2 ; WC2F1, WC2F2),
- les points d'accès (AP1F1, AP1F2 ; AP2F1, AP2F2 ; AP3F1, AP3F2) sont reliés au sol via une deuxième portion de liaisons (CPL3, CPL4) de type CPL menant aux ports de deux routeurs (RG1F1, RG1F2) disposés au sol, eux-mêmes ayant deux ports reliés à la deuxième interface de communication (MOD2) du deuxième contrôleur (ZC1U1) via un routeur central (RR) au sol.

21. Système selon une des revendications 17 à 20, pour lequel en cas de panne du routeur embarqué (RT1F2) ou/et du routeur au sol (RG1F2) correspondant à une des deux liaisons de type radiofréquence, les routeurs véhicule et sol (RT1F1, RG1F1) en mode nominal de routage de paquets sur un réseau de type WLAN sur l'autre liaison intacte de type radiofréquence prennent en charge le routage de paquets sur les réseaux de type WLAN prévus sur les deux liaisons de type radiofréquence.

22. Système selon une des revendications 20 à 21, pour lequel
chacun des deux routeurs distincts (RG1F1, RG1F2) disposés au sol a au moins un port physique et au moins deux ports logiques, de façon à être, via son interface de communication (MOD3, MOD4), en communication avec chaque point d'accès (AP1F1, AP1F2 ; AP2F1, AP2F2 ; AP3F1, AP3F2).

23. Système selon une des revendications précédentes, pour lequel les interfaces de communication (MOD1, MOD2, MOD3, MOD4) sont reliées aux liaisons (CPL1, CPL2, CPL3, CPL4) de type CPL via des brins de dérivation (STUB) permettant de minimiser une perturbation sur les liaisons (CPL1, CPL2, CPL3, CPL4) si un court-circuit a lieu au niveau d'au moins une interface de communication.

24. Système selon une des revendications précédentes, pour lequel un dispositif d'auto-surveillance des interfaces de communication (MOD1, MOD2, MOD3, MOD4) neutralise, au port de communication concerné, une émission permanente de données parasites en cas de défaillance de l'interface de communication.

## Patentansprüche

1. Für ein Fahrzeug geeignetes Kommunikationssystem, umfassend ein Kommunikationsnetzwerk zwischen mindestens zwei Kommunikationsschnittstellen (MOD1, MOD2), die jeweils mit einem ersten Controller (CTRL1), der eine Steuerungsanwendung verwaltet, und mit einem zweiten Controller (CTRL2), der eine Steuerungsanwendung verwaltet, verbunden sind, wobei die Kommunikationsschnittstellen je Controller mindestens einen Kommunikationsport besitzen, von dem aus eine Kommunikationsverbindung möglich ist, und die Kommunikationsverbindung bei einer Steuerungsanwendungsübertragung zwischen den beiden Kommunikationsschnittstellen vom Typ PLC ("Power Line Communication") ist und mindestens zwei elektrisch leitende Verbindungen (PLC1, PLC2) umfasst, die mit jedem der jeweiligen Kommunikationsports über mindestens einen Kopplungstransformator (PLC-Koppler) verbunden sind, **dadurch gekennzeichnet, dass** jede Verbindung (PLC1 oder PLC2) ein Paar verschiedene elektrische Leiter umfasst.

2. System nach Anspruch 1, wobei das Paar verschiedene elektrische Leiter eine Verkabelung zur Signalisierung von Nahverkehr vom Typ K23 umfasst, die mindestens ein Paar verdrillte Kabel und eventuell eine Schirmung umfasst.

3. System nach Anspruch 1 oder 2, wobei der Kopplungstransformator eine derartige Impedanzverteilung zwischen den Verbindungen (PLC1, PLC2) aufweist, dass, wenn eine der Verbindungen fehlerhaft ist, die andere Verbindung die Steuerungsanwendungsübertragung gewährleistet.

4. System nach einem der vorangehenden Ansprüche, wobei die Verbindungen (PLC1, PLC2) über Leiterpaare angeschlossen sind, die ausschließlich für die PLC-Technik ohne vorhandenen überlagerten Versorgungsstrom bestimmt sind.

5. System nach einem der vorangehenden Ansprüche, wobei mindestens ein Abschnitt einer der Verbindungen (PLC1, PLC2) ein elektrischer Anschluss zur Versorgung eines Elements des Kommunikationsnetzwerks ist.

6. System nach einem der vorangehenden Ansprüche, wobei der Kopplungstransformator mindestens aus einer dritten leitenden Wicklung besteht, die mit einer der Verbindungen (PLC1, PLC2) verbunden ist.

7. System nach einem der vorangehenden Ansprüche, wobei der Kopplungstransformator mindestens aus zwei elektrischen Transformatoren besteht, die jeweils mit einer der Verbindungen (PLC1, PLC2) verbunden sind.

8. System nach einem der vorangehenden Ansprüche, wobei der Kopplungstransformator eine Längsimpedanz und/oder eine minimale Streuinduktivität hat.

9. System nach einem der vorangehenden Ansprüche, wobei, wenn eine Verteilung der Impedanz an einem Kommunikationsport mittels des Leitungsanpassungswiderstandes an der Kommunikationsschnittstelle unzureichend oder nicht nutzbar ist, mindestens ein Dämpfungsglied wie beispielsweise ein Netzwerk aus Widerständen, dessen Dämpfung in der Größenordnung von einigen Dezibel liegt, zwischen den beiden Verbindungen (PLC1, PLC2) und dem Kommunikationsport angeordnet ist.

10. System nach einem der vorangehenden Ansprüche, wobei die beiden Verbindungen (PLC1, PLC2) verschiedene elektrische Trägerfrequenzen umfassen und/oder verschiedene Steuerungssignale übertragen.

11. System nach einem der vorangehenden Ansprüche, wobei mindestens bei einer der Verbindungen (PLC1, PLC2) ein Kondensator in Reihe mit einer Ausgangswicklung des Kopplungstransformators angeordnet ist, um verschiedene elektrische Trägerströme und eine niederfrequente oder Gleichstromversorgung zu überlagern.

12. System nach einem der vorangehenden Ansprüche, wobei die Kommunikationsschnittstelle, der Controller und/oder eine der Verbindungen (PLC1, PLC2) mit einem Ausfallüberwachungsmodul wie beispielsweise einem Gleichstromeinspeiser oder einem Spannungsgenerator verbunden ist, das mindestens einem dieser Elemente nachgelagert angeordnet ist und dessen Strom oder Spannung mindestens einem dieser Elemente vorgelagert messbar ist.

13. System nach einem der vorangehenden Ansprüche, wobei die Kommunikationsschnittstellen, die Controller und/oder mindestens eine der Verbindungen (PLC1, PLC2) in das Fahrzeug wie beispielsweise ein öffentliches Verkehrsmittel (ZUG1) integriert sind.

14. System nach Anspruch 13, wobei das öffentliche Verkehrsmittel (ZUG1) mehrere angehängte Fahrzeuge umfasst, deren Kommunikationsnetzwerke über Zwischenverbindungen (PLC1, PLC2) vom Typ PLC koppelbar sind, zum Beispiel über einen elektrischen Koppler an einer Kupplungsvorrichtung zwischen Fahrzeugen, über Fahrleitungen zur Stromversorgung der Fahrzeuge, über einen Kontakt der Fahrzeuge mit mindestens einer Führungsschiene usw., oder anstelle eines streckenseitigen oder drahtlosen Zwischennetzwerks, das die Kommunikation mit jedem der Fahrzeuge verwaltet, oder zusätzlich dazu.

15. System nach Anspruch 13 oder 14, wobei:
- mindestens ein Abschnitt der Verbindungen (PLC1, PLC2) zwischen zwei Kommunikationsschnittstellen jeweils in das erste öffentliche Verkehrsmittel (ZUG1) und ein zweites öffentliches Verkehrsmittel (ZUG2) integriert ist,
- die beiden Verkehrsmittel (ZUG1, ZUG2) physisch getrennt und anhängbar sind,
- der andere Abschnitt der Verbindungen (PLC1, PLC2) aus Fahrleitungen oder elektrischen Schienen zwischen den beiden öffentlichen Verkehrsmitteln (ZUG1, ZUG2) besteht, anstelle eines streckenseitigen oder drahtlosen Zwischennetzwerks, das die Kommunikation mit jedem der öffentlichen Verkehrsmittel verwaltet, oder zusätzlich dazu.

16. System nach einem der vorangehenden Ansprüchen, wobei die Kommunikationsschnittstellen (MOD3, MOD4), die über die Verbindungen (PLC3, PLC4) vom Typ PLC verbunden sind, streckenseitig angeordnet sind, d. h. in einem streckenseitigen Kommunikationsnetzwerk (Cluster 1, Cluster 2, RG1F1, RG1F2 usw.), das eine Funkkommunikation (WLAN) mit in das Fahrzeug integrierten Geräten über eine redundante Vorrichtung ermöglicht, die zwei redundante integrierte Router zum Senden/Empfangen umfasst.

17. System nach einem der vorangehenden Ansprüche, wobei:
- mindestens der erste Controller (OBCU1) und die zugehörige Kommunikationsschnittstelle (MOD1) in das Fahrzeug integriert sind und mindestens ein zweiter Controller (RG1F1, RG1F2, ZC1U1 usw.) und eine zugehörige Kommunikationsschnittstelle (MOD3, MOD4) in einem zweiten streckenseitigen Kommunikationsnetzwerk angeordnet sind,
- wobei die integrierte Kommunikationsschnittstelle (MOD1) mit mindestens einer Kommunikationsschnittstelle (MOD3, MOD4) über zwei Verbindungen (L1, L2) verbunden ist, die jeweils einen Abschnitt (PLC1, PLC2) vom Typ PLC an Bord des Fahrzeugs und einen weiteren streckenseitigen Abschnitt (PLC3, PLC4) vom Typ PLC und einen drahtlosen Abschnitt für eine Funkübertragung zwischen dem Fahrzeug und der Strecke umfassen.

18. System nach Anspruch 17, wobei die integrierte Kommunikationsschnittstelle (MOD1) über einen ersten Abschnitt von Verbindungen (PLC1, PLC2) mit zwei Fahrzeugroutern (RT1F1, RT1F2) verbunden ist, die Daten zur Strecke/von der Strecke über mindestens zwei integrierte Funksender/-empfänger (WC1F1, WC1F2; WC2F1, WC2F2) senden und/oder empfangen, die entweder dieselbe Funkfrequenz oder zwei verschiedene Funkfrequenzen (F1, F2) haben.

19. System nach Anspruch 18, wobei eine Verbindung zwischen einem Controller und seiner Kommunikationsschnittstelle (MOD1) über mindestens einen physischen Port und mindestens zwei logische Ports erfolgt, die beispielsweise zwei IP-Adressen und Routingdaten umfassen, um standardmäßig zwei Kommunikationsgateways Fahrzeug-Strecke oder Fahrzeug-Fahrzeug an jedem der beiden verschiedenen und integrierten Router (RT1F1, RT1F2) zu besitzen.

20. System nach einem der Ansprüche 18 bis 19, wobei:
- Access-Point-Paare vom Typ Funksender/-empfänger (AP1F1, AP1F2; AP2F1, AP2F2; AP3F1, AP3F2) an der Strecke entlang des Weges des Fahrzeugs verteilt sind und jeweils einen Funkfrequenz-Sende-/Empfangskanal zu einem der integrierten Funksender/-empfänger (WC1F1, WC1F2; WC2F1, WC2F2) umfassen,
- Access-Points (AP1F1, AP1F2; AP2F1, AP2F2; AP3F1, AP3F2) mit der Strecke über einen zweiten Abschnitt von Verbindungen (PLC3, PLC4) vom Typ PLC verbunden sind, der zu den Ports von zwei streckenseitig angeordneten Routern (RG1F1, RG1F2) führt, die wiederum zwei Ports besitzen, die mit der zweiten Kommunikationsschnittstelle (MOD2) des zweiten Controllers (ZC1U1) über einen zentralen streckenseitigen Router (RR) verbunden sind.

21. System nach einem der Ansprüche 17 bis 20, wobei bei einem Ausfall des integrierten Routers (RT1F2) und/oder des streckenseitigen Routers (RG1F2), der einer der beiden Funkfrequenzverbindungen entspricht, die fahrzeug- und streckenseitigen Router (RT1F1, RG1F1) im Nennbetrieb des Routens von Paketen über ein Netzwerk vom Typ WLAN über die andere intakte Funkfrequenzverbindung das Routen von Paketen über die Netzwerke vom Typ WLAN, die an den beiden Funkfrequenzverbindungen vorgesehen sind, übernehmen.

22. System nach einem der Ansprüche 20 bis 21, wobei jeder der beiden verschiedenen streckenseitig angeordneten Router (RG1F1, RG1F2) mindestens einen physischen Port und mindestens zwei logische Ports hat, so dass er über seine Kommunikationsschnittstelle (MOD3, MOD4) mit jedem Access-Point (AP1F1, AP1F2; AP2F1, AP2F2; AP3F1, AP3F2) kommuniziert.

23. System nach einem der vorangehenden Ansprüche, wobei die Kommunikationsschnittstellen (MOD1, MOD2, MOD3, MOD4) mit den Verbindungen (PLC1, PLC2, PLC3, PLC4) vom Typ PLC über Abzweigadern (STUB) verbunden sind, die es ermöglichen, eine Störung in den Verbindungen (PLC1, PLC2, PLC3, PLC4) im Fall eines Kurzschlusses an mindestens einer Kommunikationsschnittstelle zu minimieren.

24. System nach einem der vorangehenden Ansprüche, wobei eine Vorrichtung zur Selbstüberwachung der Kommunikationsschnittstellen (MOD1, MOD2, MOD3, MOD4) am betroffenen Kommunikationsport eine ständige Aussendung von Stördaten bei einem Ausfall der Kommunikationsschnittstelle unterdrückt.

## Claims

1. Communication system adapted for a vehicle comprising a communication network between at least two communication interfaces (MOD1, M0D2) respectively connected to a first controller (CTRL1) managing a command application and a second controller (CTRL2) managing a command application,
and wherein the communication interfaces have, for each controller, at least one communication port, from which a communication link is possible,
and for transmission of a command application between the two communication interfaces, the communication link is a PLC ("Powerline communication") type link comprising at least two electrical conducting links (PLC1, PLC2) each connected to respective communication ports by means of at least one coupling transformer (PLC_coupler),
**characterised in that**
each link (PLC1 or PLC2) comprises a pair of different electrical conductors.

2. System according to claim 1, wherein the pair of different electrical conductors comprises wiring for K23 type urban transport signalling comprising at least one pair of twisted cables and possibly shielding.

3. System according to claim 1 or 2, wherein the coupling transformer has impedance distribution between the links (PLC1, PLC2) such that if one of the links is faulty, the other link ensures the transmission of the command application.

4. System according to one of the preceding claims, wherein the links (PLC1, PLC2) are connected by pairs of conductors exclusively dedicated to the PLC technique without the presence of a stacked supply current.

5. System according to one of the preceding claims, wherein at least one portion of one of the links (PLC1, PLC2) is an electrical supply connection of a component of the communication network.

6. System according to one of the preceding claims, wherein the coupling transformer is composed of at least a third conducting coil connected to one of the links (PLC1, PLC2).

7. System according to one of the preceding claims, wherein the coupling transformer is composed of two electrical transformers respectively connected to one of the links (PLC1, PLC2).

8. System according to one of the preceding claims, wherein the coupling transformer has a series impedance and/or minimal leak inductance.

9. System according to one of the preceding claims, wherein if distribution of the impedance at a communication port by means of the line matching resistor at the communication interface is insufficient or unusable, at least one attenuator, such as a resistor network wherein attenuation is approximately several decibels, is positioned between the two connections (PLC1, PLC2) and the communication port.

10. System according to one of the preceding claims, wherein the two links (PLC1, PLC2) comprise different electrical frequency carriers and/or transmit different command signals.

11. System according to one of the preceding claims, wherein at least for one of the links (PLC1, PLC2), a capacitor is placed in series with a coupling transformer output coil, in order to superimpose various currents of electrical carriers and a low frequency or direct current supply.

12. System according to one of the preceding claims, wherein the communication interface, the controller and/or one of the links (PLC1, PLC2) is connected to a fault surveillance module, such as a direct current injector, or a voltage generator, placed downstream of at least one of these components and whose current, or voltage, can be measured upstream of at least one of these components.

13. System according to one of the preceding claims, wherein communication interfaces, the controllers and/or at least one of the links (PLC1, PLC2) are on-board the vehicle, such as a means of public transport (TRAIN1).

14. System according to claim 13, wherein the means of public transport (TRAIN1) comprises several connected vehicles whose communication networks can be coupled by PLC type intermediate links (PLC1, PLC2), for example via an electrical coupler at a coupling device between vehicles, via electrical supply catenaries of the vehicles, via a contact for the vehicles with at least one guide rail, etc, or in the lack of, or in addition to an intermediate network on the ground or overhead managing the communication with each of the vehicles.

15. System according to claim 13 or 14, wherein:
- at least one portion of the links (PLC1, PLC2) between two communication interfaces is respectively on-board the first means of public transport (TRAIN1) and a second means of public transport (TRAIN2),
- the two means of transport (TRAIN1, TRAIN2) are separated and can be connected physically,
- the other portion of the links (PLC1, PLC2) is composed of catenaries or electrical rails between the two means of public transport (TRAIN1, TRAIN2), in the lack of, or in addition to an intermediate ground or overhead network which manages the communication with each of the means of public transport.

16. System according to one of the preceding claims, wherein the communication interfaces (MOD3, MOD4) connected by PLC type links (PLC3, PLC4) are positioned on the ground, in other words, in a ground communication network (Cluster 1, Cluster 2, RG1F1, RG1F2, etc.) facilitating radio communication (WLAN) with equipment on-board the vehicle, via a redundant device comprising two redundant type on-board transmission/receiving routers.

17. System according to one of the preceding claims, wherein:
at least the first controller (OBCU1) and the associated communication interface (MOD1) are on-board the vehicle and at least a second controller (RG1F1, RG1F2, ZC1U1, etc.) and an associated communication interface (MOD3, MOD4) are positioned in a second communication network on the ground,
- the on-board communication interface (MOD1) is connected to at least one communication interface (MOD3, MOD4) by two links (L1, L2) respectively comprising one PLC type portion (PLC1, PLC2) on-board the vehicle and another PLC type portion (PLC3, PLC4) on the ground and an overhead portion for radio transmission between the vehicle and the ground.

18. System according to claim 17, wherein the on-board communication interface (MOD1) is connected via a first portion of links (PLC1, PLC2) to two vehicle routers (RT1F1, RT1F2) transmitting and/or receiving data to/from the ground via at least two on-board radio transmitters/receivers (WC1F1, WC1F2; WC2F1, WC2F2), having either the same radio frequency or two different radio frequencies (F1, F2).

19. System according to claim 18, wherein a link between a controller and its communication interface (MOD1) is made by at least one physical port and at least two logical ports, comprising for example two IP addresses and routing data, in order to have, by default, two vehicle/ground or vehicle/vehicle communication gateways on each of the two different and on-board routers (RT1F1, RT1F2).

20. System according to one of claims 18 to 19, wherein:
- pairs of radio transmitter/receiver type access points (AP1F1, AP1F2; AP2F1, AP2F2; AP3F1, AP3F2) are distributed on the ground along the vehicle journey and comprise respectively a radio frequency type transmission/receiving channel with one of the on-board radio transmitters/receivers (WC1F1, WC1F2; WC2F1, WC2F2),
- the access points (AP1F1, AP1F2; AP2F1, AP2F2; AP3F1, AP3F2) are connected to the ground via a second portion of PLC type links (PLC3, PLC4) leading to the ports of the two routers (RG1F1, RG1F2) positioned on the ground, themselves having two ports connected to the second communication interface (MOD2) of the second controller (ZC1U1) via a central router (RR) on the ground.

21. System according to one of claims 17 to 20, wherein, in the event of a fault relating to the on-board router (RT1F2) and/or the ground router (RG1F2) corresponding to one of the two radio frequency type links, the vehicle and ground routers (RT1F1, RG1F1) in packet routing nominal mode on a WLAN type network on the other intact radio frequency type link are responsible for packet routing on the WLAN type networks provided on the two radio frequency type links.

22. System according to one of claims 20 to 21, wherein each of the two different routers (RG1F1, RG1F2) positioned on the ground has at least one physical port and at least two logical ports, in such a way that, via its communication interface (MOD3, MOD4), they are in communication with each access point (AP1F1, AP1F2; AP2F1, AP2F2; AP3F1, AP3F2).

23. System according to the preceding claims, wherein the communication interfaces (MOD1, MOD2, MOD3, MOD4) are connected to the PLC type links (PLC1, PLC2, PLC3, PLC4) via strands in bypass position (STUB), which minimises a disruption on the links (PLC1, PLC2, PLC3, PLC4) if a short circuit occurs on at least one communication interface.

24. System according to one of the preceding claims, wherein a self-monitoring device for the communication interfaces (MOD1, MOD2, MOD3, MOD4) disables, at the communication port concerned, the permanent transmission of interference data in the event of a failure on the communication interface.
